# DEMANDE DE BREVET EUROPEEN

(11) **EP 1 816 371 A1**
(43) Date de publication de la demande: **08.08.2007**
(21) Numéro de dépôt: 07290087.1
(22) Date de dépôt: 23.01.2007
(51) Int. Cl.: F16F 13/10

(54) **Support antivibratoire hydraulique et son procédé de fabrication**

(30) Priorité: 01.02.2006 FR 0600933
(71) Demandeur: Hutchinson, 75008 Paris (FR)
(72) Inventeur: Petit, Pascal, 45190 Beaugency (FR); Rabineau, Franck, 28200 Thiville (FR); Visage, Hervé, 28200 Chateaudun (FR); Chenais, Gilles, 28200 Marboue (FR)
(74) Mandataire: Burbaud, Eric

(57) **Abrégé**

Support antivibratoire hydraulique comprenant des première et deuxième armatures rigides (2, 3) reliées entre elles par un corps en élastomère (4) qui délimite partiellement une chambre de travail (A) remplie de liquide, la deuxième armature (3) étant solidaire d'une paroi souple (15) en élastomère qui délimite partiellement une chambre de compensation (B) communiquant avec la chambre de travail (A) par un passage étranglé (C), les chambres de travail (A) et de compensation (B) étant séparées l'une de l'autre par une cloison rigide (16) solidaire de la deuxième armature (3). La deuxième armature comprend des première et deuxième pièces en matière plastique (7, 8) qui sont assemblées l'une à l'autre par soudage par friction en rotation et qui sont solidaires respectivement du corps en élastomère et de la paroi souple en élastomère.

## Description

La présente invention est relative aux supports antivibratoires hydrauliques et à leurs procédés de fabrication.

Plus particulièrement, l'invention concerne un support antivibratoire hydraulique comprenant des première et deuxième armatures rigides reliées entre elles par un corps en élastomère qui délimite partiellement une chambre de travail remplie de liquide, la deuxième armature étant solidaire d'une paroi souple en élastomère qui délimite partiellement une chambre de compensation communiquant avec la chambre de travail par un passage étranglé, les chambres de travail et de compensation étant séparées l'une de l'autre par une cloison rigide solidaire de la deuxième armature.

Le document EP-A-0 346 227 décrit un tel support antivibratoire, qui donne toute satisfaction. Dans ce support antivibratoire, les première et deuxième armatures sont métalliques et les chambres hydrauliques sont fermées par sertissage de parties métalliques au niveau de la deuxième armature.

La présente invention a pour but de perfectionner encore les supports antivibratoires de ce type, notamment pour en améliorer les performances sur au moins un des points suivants .
- amélioration de l'étanchéité,
- réduction du coût de revient,
- réduction de poids,
- adhésion plus aisée des élastomères,
- simplification du processus de fabrication,
- limitation de l'encombrement du support antivibratoire,
- limitation ou suppression des bruits parasites engendrés par le support antivibratoire.

A cet effet, l'invention propose un procédé de fabrication d'un support antivibratoire hydraulique comprenant des première et deuxième armatures rigides reliées entre elles par un corps en élastomère qui délimite partiellement une chambre de travail remplie de liquide, la deuxième armature étant solidaire d'une paroi souple en élastomère qui délimite partiellement une chambre de compensation communiquant avec la chambre de travail par un passage étranglé, les chambres de travail et de compensation étant séparées l'une de l'autre par une cloison rigide solidaire de la deuxième armature, la deuxième armature comprenant des première et deuxième pièces en matière plastique qui sont assemblées l'une à l'autre par soudage et qui sont solidaires respectivement du corps en élastomère et de la paroi souple en élastomère, les première et deuxième pièces en matière plastique étant en contact mutuel par une zone de soudage symétrique de révolution autour d'un axe central, ce procédé comprenant une étape de soudage au cours de laquelle on soude ensemble les première et deuxième pièces en matière plastique pour former la deuxième armature, en fermant ainsi la chambre de travail et la chambre de compensation.

Grâce à ces dispositions, on évite d'avoir recours à un sertissage de pièces métalliques pour fermer les chambres hydrauliques, ce qui permet d'améliorer la fiabilité de l'étanchéité de cette fermeture.

De plus, le processus de fabrication du support antivibratoire est simplifié (un dispositif de soudure par friction s'intègre plus facilement dans une ligne de production d'éléments en élastomère qu'une presse d'emboutissage ou une presse d'injection d'aluminium) et son prix de revient généralement diminué (du fait de la simplification du processus de fabrication et de part le moindre coût de la matière plastique par rapport au métal).

L'encombrement et le poids du support antivibratoire se trouve également généralement diminué par rapport aux supports antivibratoires de l'art antérieur.

Par ailleurs, lorsque les élastomères et les matières plastiques utilisés sont compatibles entre eux (notamment lorsque les élastomères ou au moins l'un des élastomères utilisés sont des élastomères thermoplastiques), l'adhésion des élastomères sur la deuxième armature est facilitée.

Enfin, la deuxième armature étant en matière plastique, ses modes vibratoires dynamiques sont fortement amortis, de sorte qu'on limite ou qu'on évite les bruits parasites qui peuvent être habituellement engendrés par les armatures métalliques. Les armatures métalliques possèdent en effet des modes vibratoires dynamiques peu amortis, et ces modes vibratoires sont en outre mal maîtrisés car variant d'un exemplaire à l'autre du support antivibratoire en fonction des contraintes introduites dans les matériaux par l'assemblage.

Dans divers modes de réalisation du procédé selon l'invention, on peut éventuellement avoir recours en outre à l'une et/ou à l'autre des dispositions suivantes :
- chacune des première et deuxième pièces en matière plastique comprend au moins des premier et deuxième épaulements circulaires dans la zone de soudage, les premiers épaulements des première et deuxième pièces en matière plastiques se faisant face parallèlement à l'axe central et les deuxièmes épaulements des première et deuxième pièces en matière plastiques se faisant face parallèlement à l'axe central, lesdits premiers et deuxièmes épaulements étant disposés pour que seuls les premiers épaulements soient en contact mutuel lorsqu'on applique les première et deuxième pièces en matière plastique l'une contre l'autre au début de l'étape de soudage, et au cours de l'étape de soudage les premiers épaulements fondent en permettant un rapprochement mutuel des première et deuxième pièces en matière plastique, jusqu'à ce que les deuxièmes épaulements viennent également en contact mutuel et fondent à leur tour ;
- au cours de l'étape de soudage, on fait tourner les première et deuxième pièces en matière plastique l'une par rapport à l'autre à une vitesse comprise entre 600 et 800 t/min.

Par ailleurs, l'invention a également pour objet un support obtenu par un procédé tel que défini ci-dessus, comprenant des première et deuxième armatures rigides reliées entre elles par un corps en élastomère qui délimite partiellement une chambre de travail remplie de liquide, la deuxième armature étant solidaire d'une paroi souple en élastomère qui délimite partiellement une chambre de compensation communiquant avec la chambre de travail par un passage étranglé, les chambres de travail et de compensation étant séparées l'une de l'autre par une cloison rigide solidaire de la deuxième armature, la deuxième armature comprenant des première et deuxième pièces en matière plastique qui sont assemblées l'une à l'autre par soudage et qui sont solidaires respectivement du corps en élastomère et de la paroi souple en élastomère, les première et deuxième pièces en matière plastique étant en contact mutuel par une zone de soudage symétrique de révolution autour d'un axe central.

Dans divers modes de réalisation du support antivibratoire selon l'invention, on peut éventuellement avoir recours en outre à l'une et/ou à l'autre des dispositions suivantes :
- les première et deuxième pièces en matière plastique sont en contact mutuel par une zone symétrique de révolution au niveau de laquelle lesdites première et deuxième pièces en matière plastique sont soudées ensemble ;
- la cloison est immobilisée en rotation par rapport à la deuxième armature ;
- la paroi souple en élastomère est en thermoplastique élastomère et est surmoulée sur la deuxième pièce en matière plastique ;
- la première armature est métallique et est majoritairement surmoulée par le corps en élastomère ;
- la deuxième armature est solidaire d'un organe limiteur de débattements à section en U qui recouvre la première armature et le corps en élastomère, le corps en élastomère comportant des bossages adaptés pour buter contre l'organe limiteur ;
- l'organe limiteur est en matière plastique;
- l'organe limiteur comporte, entre deux bords latéraux opposés :
   - une âme supérieure recouvrant la première armature,
   - deux ailes latérales qui s'étendent chacune de part et d'autre de l'âme jusqu'à une extrémité libre,
   - un pontet reliant entre elles les extrémités libres des deux ailes au niveau d'un des bords latéraux,
   et ladite deuxième armature est emboîtée dans une rainure en forme générale de U ménagée dans les extrémités libres des ailes et dans le pontet ;
- la deuxième armature comporte un orifice de remplissage qui relie l'extérieur à un volume intérieur comprenant la chambre de travail, la chambre de compensation et le passage étranglé, ledit orifice de remplissage étant obturé ;
- les première et deuxième pièces en matière plastique sont réalisées en polyamide renforcé par des fibres de verre ;
- les fibres de verre représentent au plus 35 % en masse de la matière plastique.

D'autres caractéristiques et avantages de l'invention apparaîtront au cours de la description suivante d'un de ses modes de réalisation, donné à titre d'exemple non limitatif, en regard du dessin joint.

Sur les dessins :
- la figure 1 est une vue en perspective d'un support antivibratoire hydraulique selon une forme de réalisation de l'invention,
- la figure 2 est une vue en perspective du support antivibratoire de la figure 1, vue selon une autre direction,
- la figure 3 est une vue de face du support antivibratoire des figures 1 et 2,
- les figures 4 et 5 sont des vues en coupe verticales du support antivibratoire des figures 1 à 3, la figure 4 étant coupée selon la ligne IV-IV de la figure 5 et la figure 5 étant coupée selon la ligne V-V de la figure 4,
- la figure 6 est une vue de détail en coupe, prise selon la ligne 6-6 de la figure 5,
- la figure 7 est une vue en coupe similaire à la figure 4 montrant le dispositif antivibratoire avant assemblage des deux pièces en matière plastique formant sa deuxième armature.

Sur les différentes figures, les mêmes références désignent des éléments identiques ou similaires.

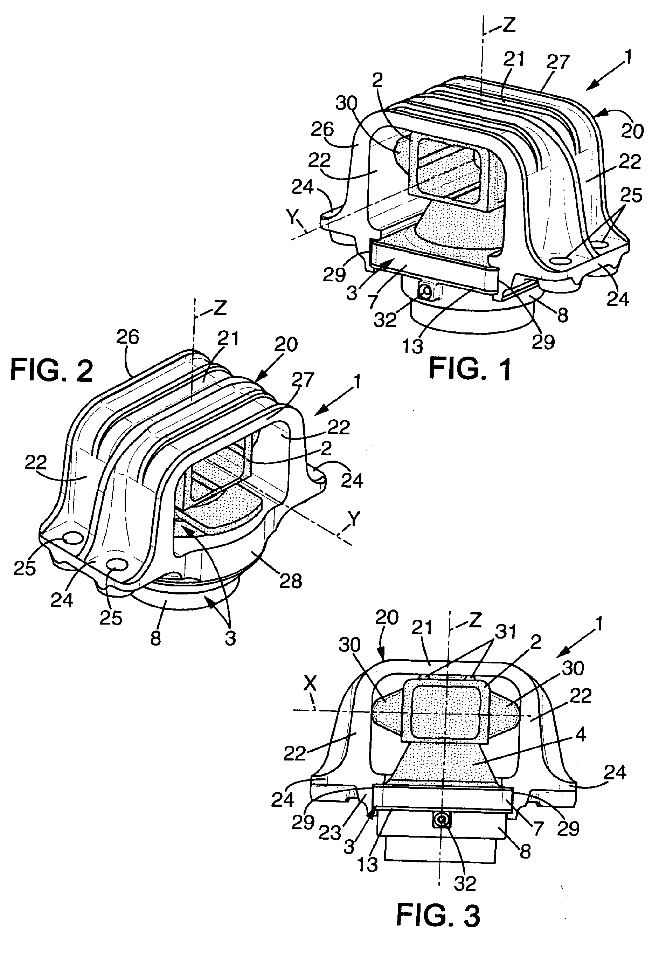

Les figures 1 à 5 représentent un support antivibratoire hydraulique 1 qui est destiné par exemple à relier un bloc motopropulseur de véhicule automobile à la caisse de ce véhicule. Le support antivibratoire 1 comporte des premières et deuxièmes armatures rigides 2,3 qui sont reliées entre elles par un corps en élastomère 4.

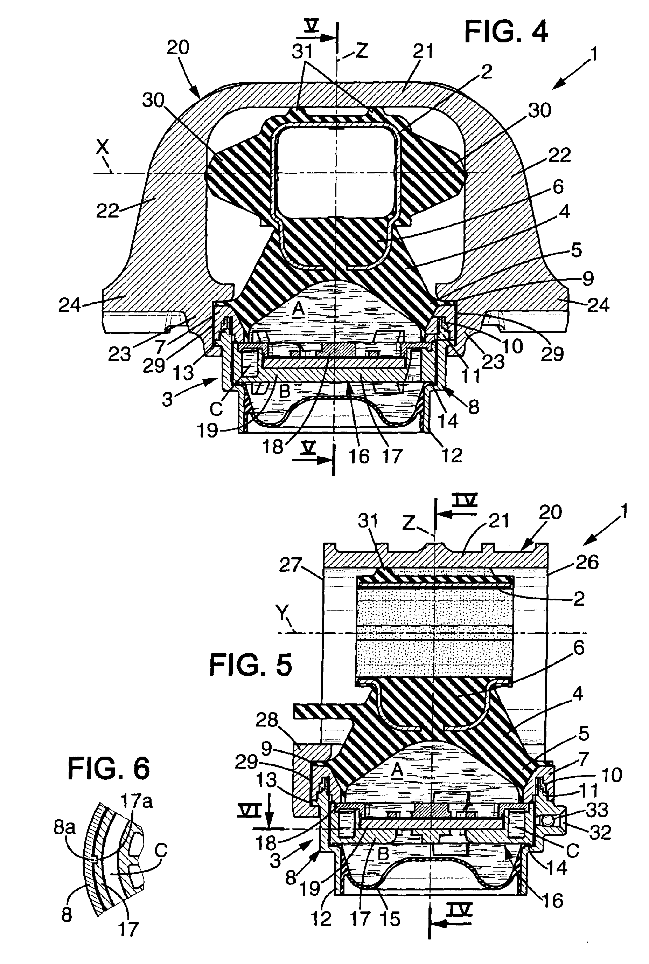

Dans l'exemple considéré ici, le corps en élastomère présente une forme sensiblement tronconique et s'étend, selon un axe central Z généralement vertical, entre :
- une base annulaire 5 qui est surmoulée et adhérisée sur une partie de la deuxième armature 3,
- et un sommet 6 qui est surmoulé et adhérisé sur la première armature 2 (voir figures 4 et 5).

La première armature 2, qui peut par exemple être destinée à être reliée au bloc motopropulseur du véhicule, peut se présenter notamment sur la forme d'une pièce de tôle roulée, formant un manchon ouvert selon un axe transversal Y perpendiculaire à l'axe Z. Ladite première armature est majoritairement (et de préférence entièrement) surmoulée par le corps en élastomère, de façon à amortir toutes vibrations parasites dues aux modes vibratoires dynamiques de ladite pièce de tôle roulée.

La deuxième armature 3, quant à elle, comprend des première et deuxième pièces en matière plastique au 7,8 qui sont assemblées l'une à l'autre par soudage. Les deux pièces 7,8 sont réalisées dans la même matière plastique, soit dans des matières plastiques différentes mais soudables entre elles.

A titre d'exemple, les pièces 7,8 peuvent être réalisées toutes les deux en polyamide 6-6 chargé en fibre de verre, avec une charge de fibre de verre inférieure à 35 % en masse (par exemple de l'ordre de 30 %).

La première pièce en matière plastique 7 se présente ici sous la forme d'une plaquette annulaire s'étendant perpendiculairement à l'axe Z, avec un contour intérieur circulaire centré sur l'axe Z, sur lequel est surmoulée et adhérisée la base 5 du corps en élastomère, et un contour extérieur sensiblement rectangulaire. La première pièce en matière plastique 7 comporte en outre une face supérieure qui peut par exemple être recouverte d'une couche d'élastomère venue de matière avec la base 5 du corps en élastomère et une face inférieure dotée d'une gorge circulaire 10 centrée sur l'axe Z et ouverte vers le bas (voir les figures 4,5,7).

La deuxième pièce en matière plastique 8 présente une forme tubulaire à section circulaire centrée sur l'axe Z et s'étendant selon ledit axe Z entre une première extrémité 11 emboîtée et soudée dans la gorge 10 et une deuxième extrémité libre 12.

De plus, au voisinage de la première extrémité 11, la deuxième pièce en matière plastique 8 comporte une bride extérieure 13 de même forme que le contour extérieur de la première pièce en matière plastique 7 et disposée en correspondance avec ledit contour extérieur. Par ailleurs, entre la bride extérieure 13 et la deuxième extrémité 12, la deuxième pièce en matière plastique 8 présente un étranglement qui forme un épaulement 14 vers le haut.

Une paroi souple en élastomère 15, en forme de membrane, est en outre surmoulée à l'intérieur de la deuxième pièce en matière plastique 8, de préférence entre l'épaulement 14 et la deuxième extrémité 12 de ladite deuxième pièce en matière plastique. Cette paroi souple 15 peut avantageusement être réalisée en thermoplastique élastomère, par exemple du Vegaprene® commercialisé par le Groupe HUTCHINSON. Dans ce cas, la paroi souple en élastomère 15 adhère à la deuxième pièce en matière plastique 8 par simple surmoulage, sans nécessiter d'ajout d'adhésif entre l'élastomère et la deuxième pièce en matière plastique. Avantageusement, l'élastomère de la paroi souple 15 tapisse l'épaulement 14 en direction du corps en élastomère 4.

Comme représenté sur les figures 4, 5 et 7, le support antivibratoire 1 comporte en outre une cloison rigide 16 qui, dans l'exemple représenté, comprend deux grilles superposées en matière plastique 17,18 enfermant avec jeu un clapet de découplage central 19 et délimitant entre elles un passage étranglé C annulaire qui entoure le clapet de découpage 19.

Le corps en élastomère 4, la deuxième armature 3 et la paroi souple en élastomère 15 délimitent ainsi un volume intérieur fermé qui est rempli de liquide et qui est subdivisé par la cloison 16 en une chambre de travail A du côté du corps en élastomère 4 et une chambre de compensation B du côté de la paroi souple en élastomère 15. La chambre de travail A communique avec la chambre de compensation B par l'intermédiaire du passage étranglé C.

Par ailleurs, comme représenté sur les figures 1 à 3, la deuxième armature 3 est solidaire d'un organe limiteur de débattement 20 en matière plastique, réalisé par exemple en polyamide 6-6 chargé en fibre de verre, ou autre.

Le limiteur de débattement 20 recouvre la première armature 2 et le corps en élastomère 4, et il présente une section générale en U, avec:
- une âme supérieure 21 sensiblement horizontale, qui recouvre la première armature 2,
- deux ailes latérales 22 qui s'étendent vers le bas de part et d'autre de l'âme supérieure 21, chacune jusqu'à une extrémité libre 23. Chaque aile latérale 22 comporte en outre, au voisinage de l'extrémité libre 23, un rebord extérieur 24 doté de trous de fixation 25 permettant de solidariser l'organe limiteur 1, et donc la deuxième armature 3, à la caisse du véhicule.

L'organe limiteur s'étend selon l'axe Y susmentionné entre de bords latéraux 26,27. Au niveau du bord latéral 27, les extrémités libres 23 des deux ailes latérales de l'organe limiteur sont reliées entre elles par un pontet 28. Le pontet 28 et les extrémités libres 23 des deux ailes latérales délimitent ensemble une rainure 29 en forme générale de U dans laquelle sont emboîtés sans jeu la première pièce en matière plastique 7 et la bride extérieure 13 de la deuxième pièce en matière plastique. L'assemblage sans jeu dans la rainure 29 est facilité par la couche d'élastomère 9 qui recouvre la face supérieure de la première pièce en matière plastique 7 et qui est comprimée verticalement entre ladite face supérieure de la première pièce en matière plastique 7 et la face en regard de la rainure 29.

L'organe limiteur 20 permet de limiter les débattements de la première armature 2, grâce à des bossages 30,31 du corps en élastomère qui sont formés au niveau de ladite première armature. Les bossages 30 sont adaptés pour buter contre les ailes latérales 22 de l'organe limiteur dans une direction transversale X perpendiculaire au direction Y,Z susmentionnées, et les bossages 31 sont adaptés pour buter contre l'âme 21 de l'organe limiteur dans la direction de l'axe Z.

Enfin, le support antivibratoire peut éventuellement comporter un orifice de remplissage 32 réalisé dans la deuxième pièce en matière plastique 8 de la deuxième armature. L'orifice de remplissage 32 communiquer le volume intérieur A,B,C du support antivibratoire avec l'extérieur. Cet orifice de remplissage 32 est obturé par exemple par une bille 33 (voir figure 5) engagée à force dans ledit orifice, ou par tout autre moyen d'obturation, après mise sous vide et remplissage en liquide du volume intérieur du support antivibratoire.

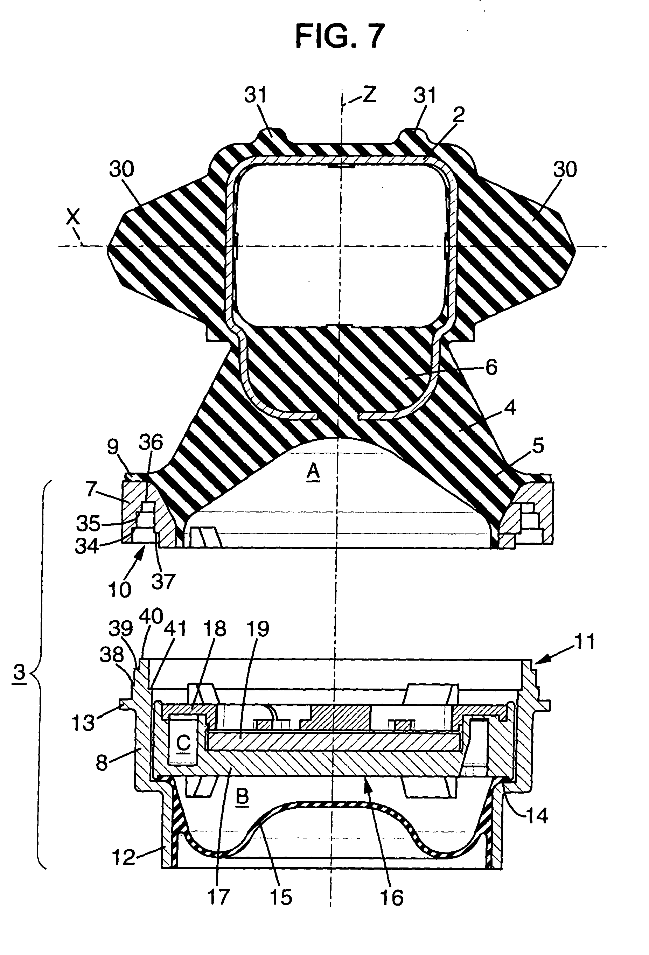

Comme représenté sur la figure 7, lors de la fabrication du support antivibratoire, on réalise d'abord deux sous-ensembles :
- un premier sous-ensemble comprenant le corps en élastomère 4 surmoulé sur la première armature 2 et la première pièce en matière plastique 7,
- et un deuxième sous-ensemble comprenant la deuxième pièce en matière plastique 8 dans laquelle est surmoulée la paroi souple en élastomère 15 et dans laquelle on vient emboîter la cloison rigide 16.

Avantageusement, la cloison rigide 16 est emboîtée dans la deuxième pièce en matière plastique 8 sans possibilité de rotation relative entre les deux pièces autour de l'axe Z. Par exemple, comme présenté sur la figure 6, la deuxième pièce en matière plastique 8 peut comporter localement une nervure verticale qui pénètre dans une rainure correspondante 17a formée à l'extérieur de la grille 17 de la cloison rigide.

Après réalisation de ces deux sous-ensembles, les première et deuxième pièces en matière plastique 7,8 sont emboîtées et soudées ensemble, par tout procédé de soudage connu, par exemple par soudage par ultrasons, par soudage par lame chauffante, par soudage laser ou soudage par friction. Dans l'exemple considéré ici, on pourra utiliser par exemple un soudage par friction en mettant en rotation la deuxième pièce en matière plastique 8 et la cloison rigide 16, autour de l'axe Z, en maintenant fixe la première pièce en matière plastique 7, tout en engageant la première extrémité 11 de la deuxième pièce en matière plastique dans la rainure circulaire 10 de la première pièce en matière plastique, avec une certaine force d'appui. La vitesse de rotation de la deuxième pièce en matière plastique 8 peut par exemple être de l'ordre de 600 à 800 tours par minute, pour les dimensions habituelles des supports antivibratoires.

Avantageusement, la rainure circulaire 10 de la première pièce en matière plastique et la première extrémité 11 de la deuxième pièce en matière plastique présentent des formes étagées de façon à faciliter la fusion de la matière plastique par friction.

En particulier, dans l'exemple considéré ici, la rainure 10 comporte, de l'extérieur vers l'intérieur, un épaulement 34, suivi d'un épaulement 35 plus profond et d'une gorge 36 également plus profonde, la gorge 36 étant elle-même suivie, vers l'intérieur, par un épaulement 37 moins profond que l'épaulement 34.

La première extrémité 11 de la deuxième pièce en matière plastique, quant à elle, comporte, de l'extérieur vers l'intérieur :
- un épaulement 38,
- un épaulement 39 situé à une hauteur supérieure à l'épaulement 38,
- un épaulement 40 formé par la face d'extrémité de la première extrémité 11,
- et un épaulement 41 de niveau inférieur à l'épaulement 38.
   Lors du processus de soudage par friction, l'épaulement 40 vient d'abord en contact avec l'épaulement 35, ce qui provoque une fusion de ces deux épaulements et permet un rapprochement relatif entre les premières et deuxième pièces 7 et 8 en matière plastique. Puis l'épaulement 39 vient en contact avec l'épaulement 34, ce qui provoque une fusion de ces deux épaulements, jusqu'à emboîtement complet de la première extrémité 11 de la deuxième pièce en matière plastique dans la rainure 10 de la première pièce en matière plastique. A la fin du processus de soudage, la rotation de la deuxième pièce 8 en matière plastique est arrêtée dans une position indexée où la bride 13 est en correspondance géométrique avec le contour extérieur de la première pièce en matière plastique 7.
   Après l'étape de soudage, on procède au remplissage du volume intérieur du support antivibratoire grâce à l'orifice de remplissage 32 susmentionné.
   Le support antivibratoire qui vient d'être décrit fonctionne de façon classique .
- lorsque les première et deuxième armatures 2,3 sont soumises à des mouvements vibratoires relatifs de relativement grande amplitude (par exemple supérieure à un millimètre) et de relativement faible fréquence (par exemple inférieure à 20 Hz) selon l'axe Z, ces mouvements provoquent des transferts de liquide entre les chambres de travail et de compensation A, B, par l'intermédiaire du passage étranglé C, avec amortissement,
- et lorsque les deux armatures 2,3 sont soumises à des mouvements vibratoires relatifs de relativement faible amplitude (par exemple inférieure à un millimètre) et de relativement grande fréquence (par exemple supérieure à 20 Hz), ces mouvements se traduisent essentiellement par des déplacements de faible amplitude du clapet de découpage 19 entre les deux grilles 17,18, ce qui permet un filtrage des vibrations et empêche leur transmission d'une armature à l'autre.

## Revendications

1. Procédé de fabrication d'un support antivibratoire hydraulique comprenant des première et deuxième armatures rigides (2, 3) reliées entre elles par un corps en élastomère (4) qui délimite partiellement une chambre de travail (A) remplie de liquide, la deuxième armature (3) étant solidaire d'une paroi souple (15) en élastomère qui délimite partiellement une chambre de compensation (B) communiquant avec la chambre de travail (A) par un passage étranglé (C), les chambres de travail (A) et de compensation (B) étant séparées l'une de l'autre par une cloison rigide (16) solidaire de la deuxième armature (3), la deuxième armature (3) comprenant des première et deuxième pièces en matière plastique (7, 8) qui sont assemblées l'une à l'autre par soudage et qui sont solidaires respectivement du corps en élastomère (4) et de la paroi souple (15) en élastomère,
les première et deuxième pièces en matière plastique (7, 8) étant en contact mutuel par une zone de soudage symétrique de révolution autour d'un axe central (Z),
ce procédé comprenant une étape de soudage au cours de laquelle on soude ensemble les première et deuxième pièces en matière plastique (7, 8) pour former la deuxième armature (3), en fermant ainsi la chambre de travail (A) et la chambre de compensation (B),
et au cours de l'étape de soudage, on fait tourner les première et deuxième pièces en matière plastique (7, 8) l'une par rapport à l'autre autour de l'axe central (Z) en appliquant lesdites première et deuxième pièces en matière plastique l'une contre l'autre au niveau de ladite zone de soudage, en réalisant ainsi un soudage par friction.

2. Procédé selon la revendication 1, dans lequel chacune des première et deuxième pièces en matière plastique (7, 8) comprend au moins des premier et deuxième épaulements circulaires (35, 40 ; 34, 39) dans la zone de soudage, les premiers épaulements (35, 40) des première et deuxième pièces en matière plastiques se faisant face parallèlement à l'axe central (Z) et les deuxièmes épaulements (35, 39) des première et deuxième pièces en matière plastiques se faisant face parallèlement à l'axe central (Z), lesdits premiers et deuxièmes épaulements étant disposés pour que seuls les premiers épaulements (35, 40) soient en contact mutuel lorsqu'on applique les première et deuxième pièces en matière plastique (7, 8) l'une contre l'autre au début de l'étape de soudage, et au cours de l'étape de soudage les premiers épaulements (35, 40) fondent en permettant un rapprochement mutuel des première et deuxième pièces en matière plastique, jusqu'à ce que les deuxièmes épaulements (34, 39) viennent également en contact mutuel et fondent à leur tour.

3. Procédé selon l'une quelconque des revendications 1 et 2, dans lequel, au cours de l'étape de soudage, on fait tourner les première et deuxième pièces en matière plastique (7, 8) l'une par rapport à l'autre à une vitesse comprise entre 600 et 800 t/min.

4. Support antivibratoire obtenu par un procédé selon l'une quelconque des revendications 1 à 3, comprenant des première et deuxième armatures rigides (2, 3) reliées entre elles par un corps en élastomère (4) qui délimite partiellement une chambre de travail (A) remplie de liquide, la deuxième armature (3) étant solidaire d'une paroi souple (15) en élastomère qui délimite partiellement une chambre de compensation (B) communiquant avec la chambre de travail (A) par un passage étranglé (C), les chambres de travail (A) et de compensation (B) étant séparées l'une de l'autre par une cloison rigide (16) solidaire de la deuxième armature (3), la deuxième armature (3) comprenant des première et deuxième pièces en matière plastique (7, 8) qui sont assemblées l'une à l'autre par soudage et qui sont solidaires respectivement du corps en élastomère (4) et de la paroi souple (15) en élastomère, les première et deuxième pièces en matière plastique (7, 8) étant en contact mutuel par une zone de soudage symétrique de révolution autour d'un axe central (Z).

5. Support antivibratoire selon la revendication 4, dans lequel la cloison (16) est immobilisée en rotation par rapport à la deuxième armature (3).

6. Support antivibratoire selon l'une quelconque des revendications 4 et 5, dans lequel la paroi souple (15) en élastomère est en thermoplastique élastomère et est surmoulée sur la deuxième pièce en matière plastique (8).

7. Support antivibratoire selon l'une quelconque des revendications 4 à 6, dans lequel la première armature (2) est métallique et est majoritairement surmoulée par le corps en élastomère (4).

8. Support antivibratoire selon l'une quelconque des revendications 4 à 7, dans lequel la deuxième armature (3) est solidaire d'un organe limiteur de débattements (20) à section en U qui recouvre la première armature (2) et le corps en élastomère (4), le corps en élastomère comportant des bossages (30, 31) adaptés pour buter contre l'organe limiteur (20).

9. Support antivibratoire selon l'une quelconque des revendications 4 à 8, dans lequel l'organe limiteur (20) est en matière plastique.

10. Support antivibratoire selon l'une quelconque des revendications 4 à 9, dans lequel l'organe limiteur (20) comporte, entre deux bords latéraux opposés (26, 27) :
- une âme supérieure (21) recouvrant la première armature (2),
- deux ailes latérales (22) qui s'étendent chacune de part et d'autre de l'âme (21) jusqu'à une extrémité libre (23),
- un pontet (28) reliant entre elles les extrémités libres (23) des deux ailes au niveau d'un des bords latéraux,
et ladite deuxième armature (3) est emboîtée dans une rainure (29) en forme générale de U ménagée dans les extrémités libres (23) des ailes et dans le pontet (28).

11. Support antivibratoire selon l'une quelconque des revendications 4 à 10, dans lequel la deuxième armature (3) comporte un orifice de remplissage (32) qui relie l'extérieur à un volume intérieur comprenant la chambre de travail (A), la chambre de compensation (B) et le passage étranglé (C), ledit orifice de remplissage étant obturé.

12. Support antivibratoire selon l'une quelconque des revendications 4 à 11, dans lequel les première et deuxième pièces en matière plastique (7, 8) sont réalisées en polyamide renforcé par des fibres de verre.

13. Support antivibratoire selon la revendication 12, dans lequel les fibres de verre représentent au plus 35 % en masse de la matière plastique.
